(19) Europäisches Patentamt
European Patent Office
Office européen des brevets

(11) **EP 2 097 301 B1**

(12) **EUROPÄISCHE PATENTSCHRIFT**

(45) Veröffentlichungstag und Bekanntmachung des Hinweises auf die Patenterteilung:
**06.08.2014 Patentblatt 2014/32**

(21) Anmeldenummer: **07847433.5**

(22) Anmeldetag: **27.11.2007**

(51) Int Cl.:
**B60T 8/171** *(2006.01)*    **G01P 21/02** *(2006.01)*
**B60T 8/32** *(2006.01)*    **G01P 3/48** *(2006.01)*
**G01P 3/489** *(2006.01)*

(86) Internationale Anmeldenummer:
**PCT/EP2007/062908**

(87) Internationale Veröffentlichungsnummer:
**WO 2008/065128 (05.06.2008 Gazette 2008/23)**

(54) **AKTIVER SENSOR, DESSEN VERWENDUNG UND VERFAHREN ZUR KOMPENSATION VON AMPLITUDENSCHWANKUNGEN DER AUSGANGSSTROMSIGNALE EINES AKTIVEN SENSORS**

ACTIVE SENSOR, USE THEREOF AND METHOD FOR COMPENSATING AMPLITUDE FLUCTUATIONS IN THE OUTPUT CURRENT SIGNAL OF AN ACTIVE SENSOR

DÉTECTEUR ACTIF, SON UTILISATION ET PROCÉDÉ DE COMPENSATION DE VARIATIONS D'AMPLITUDE DES SIGNAUX DE COURANT DE SORTIE D'UN DÉTECTEUR ACTIF

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.11.2006 DE 102006056452**
**09.06.2007 DE 102007026788**

(43) Veröffentlichungstag der Anmeldung:
**09.09.2009 Patentblatt 2009/37**

(73) Patentinhaber: **Continental Teves AG & Co. OHG 60488 Frankfurt (DE)**

(72) Erfinder:
• **DIETZ, Timo**
**65230 Hochheim am Main (DE)**
• **JÖCKEL, Wolfgang**
**36129 Gersfeld (DE)**
• **KLAUSEN, Ralf**
**60314 Frankfurt am Main (DE)**

(56) Entgegenhaltungen:
**DE-A1- 10 062 839    DE-A1- 19 815 084**
**US-B1- 6 552 531**

EP 2 097 301 B1

**Beschreibung**

Die Erfindung betrifft einen aktiven Sensor gemäß Oberbegriff von Anspruch 1, ein Verfahren gemäß Oberbegriff von Anspruch 15, sowie die Verwendung des aktiven Sensors, insbesondere als Raddrehzahlsensor, in Kraftfahrzeugen.

Druckschrift WO 98/08711 beschreibt einen aktiven Drehzahlsensor, der über zwei Leitungen mit einer elektronischen Kontrolleinheit verbunden ist und über diese beiden Leitungen mit Energie versorgt wird und die Ausgangssignale überträgt. Der aktive Sensor weist eine Signalverarbeitungsschaltung und eine Stromschnittstelle auf. Die Einstellung definierter Amplituden der Ausgangssignale wird dabei mittels einer hinreichenden Parametrisierung und Kalibrierung des aktiven Sensors erreicht, was unter Berücksichtigung von externen Einflüssen bzw. Störungen und dem Alterungsprozess relativ kostspielig ist.

In Druckschrift DE 199 06 981 A1 wird eine integrierte Kalibrier- und Messeinrichtung für Messaufnehmer vorgeschlagen, die mittels einer Daten- und Steuereinheit und eines Digital-Analog-Wandlers eine Kalibrierung des Messaufnehmers durchführen kann. Die vorgeschlagene Schaltung ist allerdings relativ aufwändig und stellt ausgangsseitig Spannungssignale bereit, welche sich erfahrungsgemäß nicht so gut zur Signalübertragung eignen. Außerdem kann diese vorgeschlagene Schaltung keine Kompensation von Amplitudenschwankungen der Signalverarbeitungsausgangssignale, beispielsweise hervorgerufen durch Alterungs- oder Temperatureinflüsse, kompensieren.

Die Aufgabe der vorliegenden Erfindung besteht darin, einen aktiven Sensor umfassend eine Stromschnittstelle zur Erzeugung definierter und insbesondere kompensierter Ausgangsstromsignalamplituden, sowie ein Verfahren zur Kompensation von Amplitudenschwankungen der Ausgangsstromsignale bzw. zur Einstellung definierter Ausgangsstromsignalamplituden, vorzuschlagen.

Diese Aufgabe wird erfindungsgemäß gelöst durch den aktiven Sensor gemäß Anspruch 1 und durch das Verfahren gemäß Anspruch 15.

Der Erfindung liegt der Gedanke zu Grunde, einen aktiven Sensor, bestehend aus einem Messmodul und einem Schnittstellenmodul, welches eine Stromerfassungseinrichtung und mindestens eine Kompensationseinrichtung umfasst, vorzuschlagen, wobei die Stromerfassungseinrichtung den Laststrom des Messmoduls erfasst und die Kompensationseinrichtung zumindest einen ersten Kompensationsstrom in Abhängigkeit zumindest des erfassten Laststroms des Messmoduls hervorrufen kann, der dem noch unkorrigierten Ausgangsstromsignal des aktiven Sensors überlagert werden kann.

Durch die Überlagerung des Ausgangsstromsignals mit dem Kompensationsstrom kann ein Ausgangsstrom definierter Amplitude eingestellt werden, unabhängig von im Wesentlichen äußeren Einflüssen, beispielsweise bedingt durch die Temperatur oder Alterungseinflüssen. Unerwünschte Amplitudenschwankungen bzw. Änderungen in den Amplituden des Ausgangsstromsignals des aktiven Sensors können so vermieden werden. Hierdurch kann gewährleistet werden, dass die amplitudencodierten Ausgangsinformationen des aktiven Sensors von dem jeweiligen Empfänger, beispielsweise der elektronischen Kontrolleinheit eines Kraftfahrzeugregelungssystems, korrekt decodiert werden können. Dies ist besonders relevant bei Verwendung des Sensors in sicherheitskritischen Systemen, wie beispielsweise in einem Kraftfahrzeugregelungssystem. Amplitudenschwankungen des Ausgangstromsignals brauchen nicht mehr nahezu vollständig bzw. mit relativ viel Aufwand, wie bisher üblich, durch eine relativ aufwändige Kalibrierung kompensiert werden. Auch Fertigungsungenauigkeiten elektronischer Bauelemente brauchen aufgrund der erfindungsgemäßen Einstellung einer definierten Ausgangssignalamplitude insbesondere nicht mittels einer Trimmung ausgeglichen zu werden.

Das Messmodul umfasst zweckmäßigerweise mindestens ein Sensorelement und eine Signalverarbeitungsschaltung.

Der erste Kompensationsstrom der Kompensationseinrichtung wird vorzugsweise in Abhängigkeit des erfassten Laststroms des Messmoduls und des durch die erste Stromquelle erzeugten Stroms hervorgerufen.

Der erste Kompensationsstrom und/oder weitere Kompensationsströme der Kompensationseinrichtung sind bevorzugt an- oder abschaltbar und/oder steuerbar. Hierdurch kann eine amplitudencodierte Informationsübertragung mittels der Sensorausgangssignale durchgeführt werden.

Es ist zweckmäßig, dass die Kompensationseinrichtung eingangsseitig mit der Eingangsleitung in einem ersten Knotenpunkt, die erste Stromquelle ausgangsseitig mit der Ausgangsleitung in einem zweiten Knotenpunkt und der erste Ausgangspfad der Kompensationseinrichtung mit dem zweiten Knotenpunkt verbunden ist, wodurch der erste Kompensationsstrom der Kompensationseinrichtung zusätzlich in Abhängigkeit des Sensoreingangsstrom erzeugt werden kann. Durch obige Verschaltung werden insbesondere der Ausgangsstrom des Messmoduls, der Ausgangsstrom der ersten Stromquelle und der erste Ausgangsstrom der Kompensationseinrichtung zu einem Ausgangsstromsignal des aktiven Sensors überlagert.

Bevorzugt sind die Stromerfassungseinrichtung ausgangsseitig sowie die Kompensationseinrichtung mittels eines zweiten Ausgangspfades gemeinsam mit dem Eingang der ersten Stromquelle verbunden. Der an dem zweiten Ausgangspfad der Kompensationseinrichtung bereitzustellende Strom ergibt sich aus dem Ausgangsstrom der Stromerfassungseinrichtung und dem Strom durch die erste Stromquelle. Insbesondere in Abhängigkeit dieses, am zweiten Ausgangspfad, bereitzustellenden Stroms und besonders bevorzugt in Abhängigkeit des Eingangsstroms des aktiven Sensors ruft die Kompensationseinrichtung zumindest den ersten Kompensationsstrom hervor.

Der Eingang der Stromerfassungseinrichtung ist zweckmäßigerweise mit der Eingangs- und/oder Ausgangsleitung zwischen dem Messmodul und dem ersten oder dem zweiten Knotenpunkt verbunden. Hierdurch kann die Stromerfassungseinrichtung relativ einfach den Laststrom des Messmoduls erfassen.

Das Messmodul ist vorzugsweise jeweils an die Verlängerung der ersten und zweiten Leitung angeschlossen und wird über diese beiden Leitungen im Wesentlichen mit Energie versorgt.

Die Stromerfassungseinrichtung weist vorzugsweise mindestens einen Sense-FET und/oder Sense-Amplifier auf, wodurch der Ausgangsstrom der Stromerfassungseinrichtung um ein im Wesentlichen definiertes Verhältnis geringer ist als der Laststrom des Messmoduls. Durch den Einsatz mindestens eines Sense-FETs bzw. Sense-Amplifiers wird der eigene Energieverbrauch der Stromerfassungseinrichtung relativ gering gehalten, so dass sich daraus eine relativ geringe, im Wesentlichen kalkulierbare, systematische Messabweichung ergibt. Alternativ bevorzugt weist die Stromerfassungseinrichtung einen Shunt auf.

Es ist zweckmäßig, dass die Stromerfassungseinrichtung mindestens einen Strom an ihrem Ausgang bereitstellt, der um einen definierten ersten Skalierfaktor verschieden, insbesondere geringer ist, als der an ihrem Eingang erfasste Strom.

Der durch die Kompensationseinrichtung hervorgerufene erste Kompensationsstrom weist vorzugsweise eine um einen definierten zweiten Skalierfaktor veränderte Amplitude auf, insbesondere eine größere Amplitude, als der am zweiten Ausgangspfad der Kompensationseinrichtung bereitgestellte Strom. Es hat sich gezeigt, dass mittels des mindestens einen Skalierfaktors der Stromerfassungseinrichtung und der Kompensationseinrichtung in relativ einfacher Weise ein zumindest erster Kompensationsstrom einstellen lässt, welcher insbesondere dazu geeignet ist das Ausgangsstromsignal des aktiven Sensors auf mindestens einen definierten Amplitudenwert einzustellen bzw. einzuregeln. Besonders bevorzugt sind der erste Skalierfaktor der Stromerfassungseinrichtung sowie der zweite Skalierfaktor der Kompensationseinrichtung im Wesentlichen gleich groß.

Es ist bevorzugt, dass die Kompensationseinrichtung alternativ zum ersten Kompensationsstrom am ersten Ausgangspfad oder zusätzlich an mindestens einem zusätzlichen mit dem zweiten Knotenpunkt verbundenen Ausgangspfad, mindestens einen zweiten, zum ersten Kompensationsstrom unterschiedlichen, Kompensationsstrom hervorrufen kann. Dabei sind die Kompensationsströme um einen definierten, jeweils zueinander unterschiedlichen, Skalierfaktor verschieden zu dem am zweiten Ausgangspfad der Kompensationseinrichtung bereitgestellten Strom. Insbesondere sind die Kompensationsströme um jeweils einen zueinander unterschiedlichen Skalierfaktor größer, als der am zweiten Ausgangspfad bereitgestellte Strom. Dabei kann zwischen diesen Kompensationsströmen umgeschaltet werden, wodurch auf relativ einfache Weise das Ausgangsstromsignal auf unterschiedliche Amplituden eingestellt bzw. eingeregelt werden kann.

Die Stromerfassungseinrichtung kann zweckmäßigerweise mindestens einen ersten und einen zweiten Strom an ihrem Ausgang bereitstellen, welche um einen definierten, jeweils zueinander unterschiedlichen, Skalierfaktor verschieden, insbesondere geringer sind, als der am Eingang erfasste Strom. Es kann dabei zwischen diesen ausgangsseitigen Strömen umgeschaltet werden.

Das Schnittstellenmodul weist vorzugsweise noch zusätzlich mindestens eine zweite zuschaltbare und/oder regelbare Stromquelle auf, welche eingangsseitig mit dem ersten Knotenpunkt und ausgangsseitig mit dem zweiten Knotenpunkt verbunden ist. Hierdurch können insbesondere mindestens zwei oder eine Vielzahl von definierten Amplitudenwerten des Ausgangsstromsignals eingestellt bzw. eingeregelt werden.

Es ist zweckmäßig, dass das Schnittstellenmodul zusätzlich mindestens ein erstes einschaltbares Stromtreiberelement aufweist, welches eingangsseitig mit dem ersten Knotenpunkt verbunden ist und ausgangsseitig einen ersten Strom am Eingang einer zusätzlichen Stromquelle bereitstellt. Der Ausgang dieser Stromquelle ist mit dem zweiten Knotenpunkt verbunden, wobei das Stromtreiberelement ausgangsseitig zusätzlich einen zweiten Strom, welcher bezüglich des ersten Stroms um einen definierten Skalierfaktor verschieden ist, an mindestens einem mit dem zweiten Knotenpunkt verbundenen zusätzlichen Ausgangspfad hervorrufen kann. Mit einem solchen Stromtreiberelement kann eine alternative oder zusätzliche Amplitudencodierung des Ausgangsstromsignals durchgeführt werden. Das Stromtreiberelement kann auch als zusätzliche, einschaltbare Kompensationseinrichtung, die nicht mit der Stromerfassungseinrichtung verbunden ist und deren Ausgangsströme entsprechend unabhängig vom erfassten Laststrom des Messmoduls bzw. dem Ausgangsstrom der Stromerfassungseinrichtung aufgefasst und entsprechend ausgelegt werden.

Die mindestens eine Stromquelle weist bevorzugt einen fest eingestellten, definierten Stromwert auf. Insbesondere wird dieser Stromwert mittels eines Regelkreises eingeregelt. Besonders bevorzugt weisen alle Stromquellen des Schnittstellenmoduls einen im Wesentlichen identischen, fest eingestellten, ganz besonders bevorzugt eingeregelten, Stromwert auf. Durch solch eine Maßnahme wird das Schnittstellenmodul im Wesentlichen unempfindlich gegenüber äußeren Einflüssen und inneren Veränderungen der Bauelemente und kann noch präziser definierte Amplituden des Ausgangsstromsignals einstellen.

Die Kompensationseinrichtung weist zweckmäßigerweise eine oder mehrere elektronische Stromspiegelschaltung/en auf.

Es ist bevorzugt, dass das Messmodul und das Schnittstellenmodul, oder die Signalverarbeitungsschaltung und das Schnittstellenmodul, als integrierte Schaltung, insbesondere auf einem Chip, ausgebildet sind.

Die Stromerfassungseinrichtung, die Kompensationseinrichtung und insbesondere mindestens ein Stromtreiberelement und/oder mindestens eine zusätzliche, zuschaltbare und/oder regelbare Stromquelle sind vorzugsweise eingangsseitig mit mindestens einem Signalausgang des Messmoduls verbunden und werden durch das Messmodul, insbesondere hinsichtlich einer Umschaltung der Skalierfaktoren, gesteuert. Hierdurch können auf relativ einfache Weise die Ausgangsinformationen des Messmoduls durch Modulation der Ausgangsstromsignale, mittels des Schnittstellenmoduls und dabei durch Ansteuerung der einzelnen Schaltungselemente, am Ausgang des aktiven Sensors bereitgestellt werden.

Es ist zweckmäßig, dass im Rahmen des Verfahrens die Kompensationseinrichtung mindestens einen zusätzlichen und/oder alternativen Kompensationsstrom hervorrufen kann, wobei zwischen diesen Kompensationsströmen in Abhängigkeit mindestens eines Ausgangssignals des Messmoduls umgeschaltet werden kann.

Vorzugsweise weist hinsichtlich des Verfahrens das Schnittstellenmodul mindestens eine zusätzliche Stromquelle und/oder mindestens ein Stromtreiberelement auf, welches mindestens einen, in Abhängigkeit mindestens eines Ausgangssignals des Messmoduls anschalt- oder umschaltbaren, Ausgangsstrom hervorruft, welche/r dem Ausgangsstrom des aktiven Sensors überlagert wird/werden.

Die Erfindung bezieht sich auch auf die Verwendung des aktiven Sensors, insbesondere als Raddrehzahlsensor, in Kraftfahrzeugen.

Der erfindungsgemäße Sensor und das erfindungsgemäße Verfahren sind zur Verwendung in den Bereichen Kraftfahrzeugtechnik, Automatisierungs- und Regelungstechnik vorgesehen. Insbesondere ist die Verwendung des erfindungsgemäßen Sensors und des Verfahrens in Raddrehzahlsensoren vorgesehen.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung

Fig. 1        ein Ausführungsbeispiel zur prinzipiellen Funktionsweise des Schnittstellenmoduls,

Fig. 2        einen beispielhaften aktiven Sensor zur Einstellung zwei definierter Amplituden des Ausgangsstromsignals, wobei die Stromerfassungseinrichtung und die Kompensationseinrichtung jeweils zwei umschaltbare Ausgangsströme hervorrufen können,

Fig. 3        ein Ausführungsbeispiel des aktiven Sensors mit einem zusätzlichen Stromtreiberelement und

Fig. 4        einen beispielhaften aktiven Sensor mit einer veranschaulichten Ansteuerung der Stromerfassungs- und Kompensationseinrichtung durch die Signalverarbeitungsschaltung des Messmoduls.

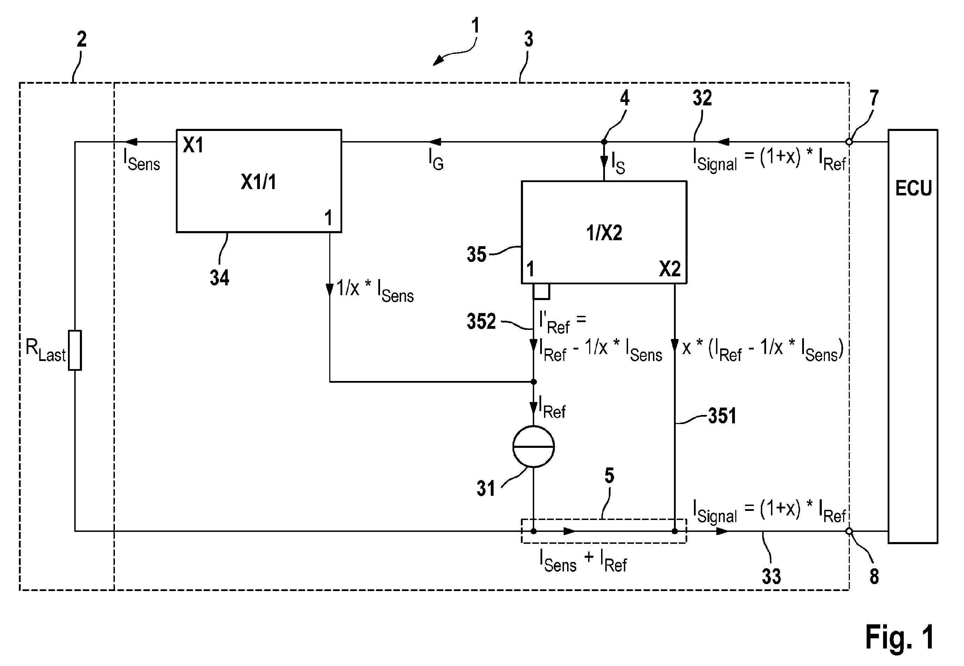

Der in Fig. 1        dargestellte beispielhafte, aktive Sensor

dient der Erläuterung der prinzipiellen Funktionsweise. Aktiver Sensor 1 ist mittels einer Zwei-Draht-Leitung an die elektronische Kontrolleinheit eines Kraftfahrzeugregelungssystems ECU angeschlossen und wird über diese beiden Leitungen mit Energie versorgt. Außerdem werden über diese beiden Leitungen auch sämtliche Informationen zwischen aktivem Sensor 1 und der ECU ausgetauscht. Dies betrifft besonders die Ausgangsinformationen aktiven Sensors 1. Diese beiden Verbindungsleitungen sind mit aktivem Sensor 1 mittels der Klemmen 7 und 8 verbunden. In Verlängerung dieser beiden Verbindungsleitungen und sensorseitig an Klemmen 7 und 8 angeschlossen weist Schnittstellenmodul 3 eine Eingangsleitung 32 und eine Ausgangsleitung 33 auf. An diesen beiden Leitungen ist sensorseitig Messmodul 2 angeschlossen, dessen gesamter Lastwiderstand durch den Widerstand $R_{Last}$ zusammengefasst und veranschaulicht wird. An Knotenpunkt 4 der Eingangsleitung 32 sind die Eingänge der Stromerfassungseinrichtung 34 und der Kompensationseinrichtung 35 angeschlossen. Stromerfassungseinrichtung 34 erfasst den Laststrom $I_{sense}$ durch Messmodul 2 und stellt diesen um einen definierten Faktor X1 verringert an ihrem Ausgang bereit. Stromquelle 31 treibt einen definierten Strom in Knotenpunkt 5 der Ausgangsleitung 33 und ist eingangsseitig mit dem Ausgang Stromerfassungsmoduls 34 und über zweiten Ausgangspfad 352 mit Kompensationseinrichtung 35 verbunden. Dabei stellt Kompensationseinrichtung 35 an zweitem Ausgangspfad 352 einen Strom bereit, welcher sich aus der Differenz des Stroms $I_{Ref}$ durch Stromquelle 31 und des Ausgangsstrom der Stromerfassungseinrichtung 34 ergibt. In Abhängigkeit dieses am zweiten Ausgangspfad 352 bereitgestellten Kompensationsstroms ruft Kompensationseinrichtung 35 an ihrem, mit Knotenpunkt 5 verbundenen, ersten Ausgangspfad 351 einen um einen definierten Faktor X2, welcher dem Faktor X1 entspricht, verstärkten Strom zur Kompensation des noch unkorrigierten Stromausgangssignals aktiven Sensors 1 hervor.

Beispielhafter aktiver Sensor 1 korrigiert also Ausgangsstromsignal $I_{signal}$, sodass unabhängig von der aktuellen Stromaufnahme Messmoduls 2 ein konstanter Signalstrom eingestellt wird. $I_{signal}$ ist im Wesentlichen lediglich von einem Referenzstrom $I_{Ref}$ der Stromquelle 31 abhängig. Es gilt beispielgemäß:

$$I_{Signal} = y * I_{Ref} = (1+x) * I_{Ref} \quad (1)$$

Dabei gilt : x = x1 = x2

Hierfür stellt eine Stromquelle 31, welche als Referenzstromquelle fungiert, den temperaturunabhängigen Strom $I_{ref}$ bereit. Der Gesamtstrom aus dem Messstrom für die Stromerfassung mittels Stromerfassungseinrichtung 34 und Grundstromaufnahme Messmoduls 2 ergibt sich zu:

$$I_G = (1 + 1/x) * I_{Sens} \quad (2)$$

Der durch Stromerfassungseinrichtung 34 verringerte Sensestrom wird nun von der Stromquelle 31 subtrahiert, wodurch sich ein neuer Referenzstrom

$$I'_{Ref} = I_{Ref} - 1/x * I_{Sens} \quad (3)$$

ergibt, der an zweitem Ausgangspfad 352 durch Kompensationseinrichtung 35 bereitgestellt wird. Dieser Kompensationsstrom wird durch Kompensationseinrichtung 35 um den Faktor X2 verstärkt und an erstem Ausgangspfad 351 hervorgerufen. Kompensationseinrichtung 35 weist beispielgemäß eine einfache Stromspiegelanordnung auf, welche von Eingangsleitung 32, bzw. der Energieversorgung aktiven Sensors 1, gespeist wird. Der Eingangsstrom $I_S$ der Kompensationseinrichtung 35 ergibt sich dann zu:

$$I_S = (1+x) * I'_{Ref} = (1+x) * (I_{Ref} - 1/x * I_{Sens}) \quad (4)$$

Der Signalstrom $I_{signal}$, also die Gesamtstromaufnahme aktiven Sensors 1 ist die Summe von $I_G$ und $I_s$, woraus folgt:

$$I_{Signal} = I_G + I_S = (1+1/x) * I_{Sens} + (1+x) * (I_{Ref} - 1/x * I_{Sens}) \quad (5)$$

$$\Leftrightarrow I_{Signal} = I_{Sens} + I_{Sens}/x + (1+x)*I_{Ref} - I_{Sens}/x - I_{Sens}$$

$$\Leftrightarrow I_{Signal} = (1+x) * I_{Ref}$$

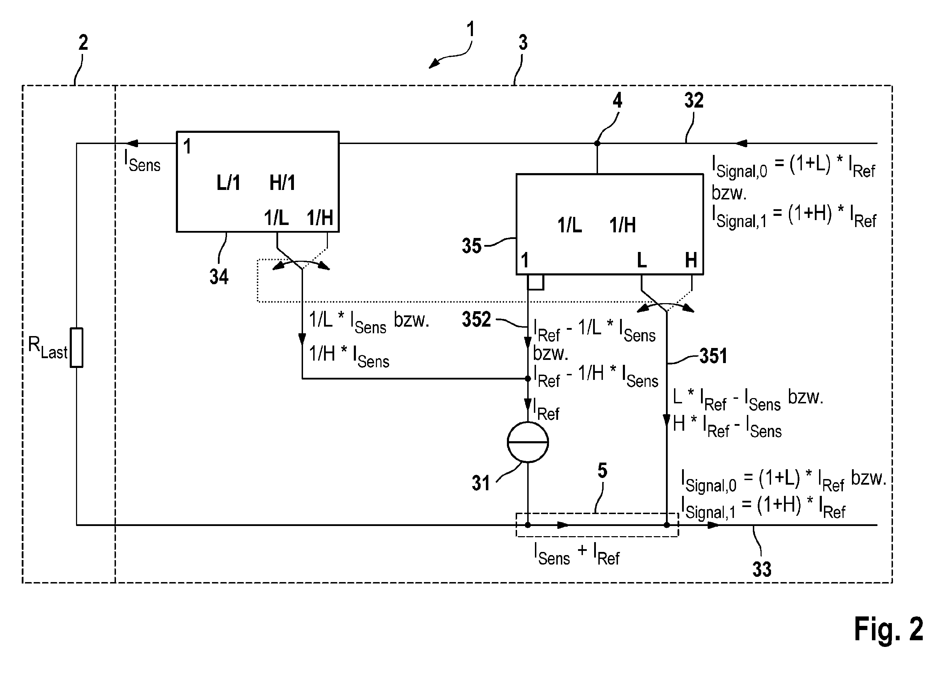

Somit ist der Signalstrom bzw. das Ausgangsstromsignal aktiven Sensors 1 unabhängig von der Stromaufnahme der restlichen Schaltungen bzw. Messmoduls 2 und im Wesentlichen allein abhängig von dem Referenzstrom $I_{Ref}$ der Stromquelle 31. Die Skalierungsfaktoren X1 = X2 werden bei integrierten Schaltungen durch die Bauelementverhältnisse festgelegt, die sich unabhängig von Prozessschwankungen realisieren lassen. Fig. 2 veranschaulicht ein Ausführungsbeispiel aktiven Sensors 1 zur Erzeugung von zwei unterschiedlichen Amplituden des Ausgangsstromsignals $I_{signal}$. Dabei weisen, ausgehend von aktivem Sensor 1, abgebildet in Fig. 1, Stromerfassungseinrichtung 34 an ihrem Ausgang und Kompensationseinrichtung 35 am ihrem ersten Ausgangspfad 351 einen Wechselschalter auf, bzw. sind umschaltbar ausgebildet. Stromerfassungseinrichtung 34 ist dabei so ausgebildet, dass diese zwei alternative Ströme bereitstellen kann, welche jeweils eine zum erfassten Laststrom $I_{sens}$ des Messmoduls 2 um zwei definierte Skalierfaktoren L und H verringerte Stromamplitude aufweisen. Entsprechend ruft Kompensationseinrichtung 35 am ersten Ausgangspfad 351 zwei alternative Kompensationsströme hervor, welche im Verhältnis zu dem an ihrem zweiten Ausgangspfad 352 bereitgestellten Strom um zwei definierte Skalierfaktoren L und H verstärkt sind bzw. eine um diese Skalierfaktoren vergrößerte Amplitude aufweisen.

Für den logischen "0"-Pegel, entsprechend der Schalterstellungen mit durchgezogener Linie, liefert Stromerfassungseinrichtung 34 also einen um den Skalierfaktor L zu 1 verringerten Sensestrom $I_{sens}$, der von $I_{Ref}$ subtrahiert wird. Dieser reduzierte Referenzstrom $I'_{Ref}$ wird durch Kompensationseinrichtung 35 um dem Skalierfaktor L verstärkt. Die Gesamtstromaufnahme des aktiven Sensors 1 ergibt sich damit zu:

$$I_{Signal,0} = (1+L) * I_{Ref} \quad (6)$$

Für den logischen "1"-Pegel, entsprechend der Schalterstellung mit gestrichelter Linie, wird $I_{sens}$ durch Stromerfassungseinrichtung 34 um den Skalierfaktor H verringert und $I'_{Ref}$ durch Kompensationseinrichtung 35 um den Skalierfaktor H verstärkt. Der Gesamtstrom aktiven Sensors 1 ergibt sich dann zu:

$$I_{Signal,1} = (1+H) * I_{Ref} \quad (7)$$

Die Amplitude des Ausgangssignalstroms $I_{signal}$ für logische "0"- und "1"-Pegel lassen sich somit durch die Skalierfaktoren L und H sowie den Referenzstrom $I_{Ref}$ der Stromquelle 31 einstellen.

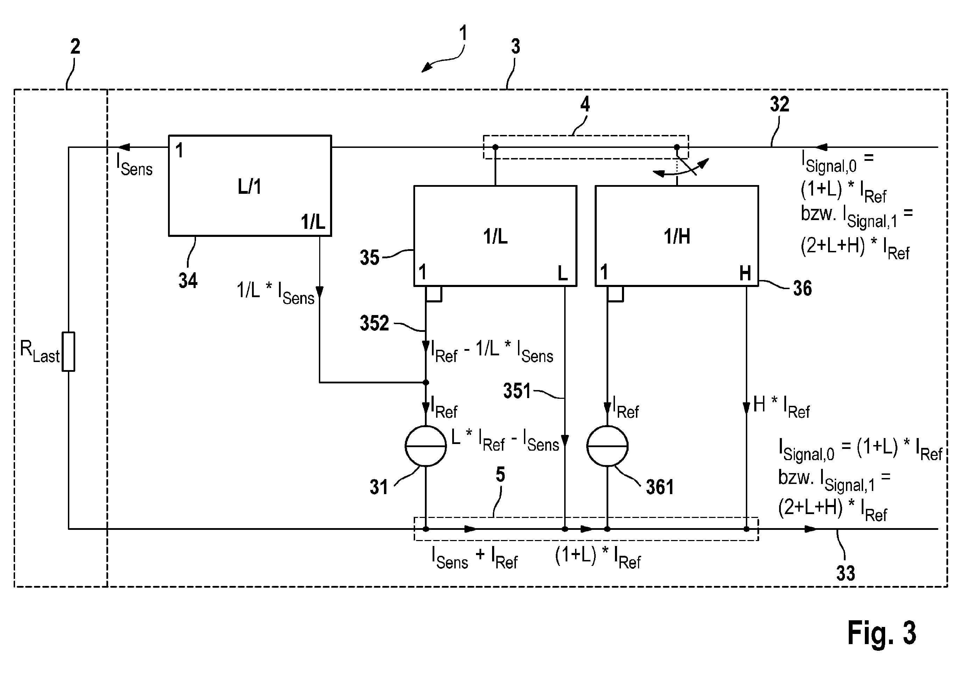

In Fig. 3 wird ein alternatives Ausführungsbeispiel aktiven Sensors 1 zur Erzeugung von zwei unterschiedlichen Amplituden des Ausgangsstromsignals $I_{signal}$ gezeigt. Dieses Ausführungsbeispiel erweitert den in Fig.1 dargestellten aktiven Sensor 1 um ein anschaltbares Stromtreiberelement 36, welches eingangsseitig mit erstem Knotenpunkt 4 der Eingangsleitung 32 verbunden ist und ausgangsseitig einen ersten Strom am Eingang einer zusätzlichen Stromquelle 361 bereitstellt, deren Ausgang mit zweitem Knotenpunkt 5 der Ausgangsleitung 33 verbunden ist. Dabei kann Stromtreiberelement 36 ausgangsseitig einen zusätzlichen zweiten Strom $H*I_{Ref}$ an einem zusätzlichen mit Knotenpunkt 5 verbundenen Ausgangspfad hervorrufen, welcher bezüglich des ersten am Eingang der Stromquelle 361 bereitgestellten Stroms um den definierten Skalierfaktor H verstärkt ist. Stromtreiberelement 36 weist beispielgemäß eine Stromspiegelschaltung auf. Durch Zu- bzw. Anschalten des Stromtreiberelements 36 wird die Amplitude entsprechend einer logischen "1" des Ausgangsstromsignals $I_{signal}$ erzeugt. Stromtreiberelement 36 kann auch weitgehend als von der Stromerfassungseinrichtung 34 unabhängige, abschaltbare Kompensationseinrichtung verstanden werden und entsprechend ausgelegt werden. Kompensationseinrichtung 35 ist beispielgemäß ständig aktiv. Für den logischen "0"-Pegel des Ausgangsstromsignals aktiven Sensors 1 ist der Schalter des Stromtreiberelements 36 geöffnet und damit ist Stromtreiberelement 36 nicht aktiv. Somit ergibt sich der Signalstrom, bzw. die Amplitude des Ausgangsstromsignals aktiven Sensors 1, zu:

$$I_{Signal,0} = (1+L) * I_{Ref} \quad (8)$$

Für den logischen "1"-Pegel, Schalter des Stromtreiberelements 36 geschlossen, wird zu dem Signalstrom aus Gleichung (8) der Strom $(1+H) * I_{Ref}$, der durch Stromtreiberelement 36 hervorgerufen wird, im zweiten Knotenpunkt 5 hinzuaddiert. Damit ergibt sich folgender Gesamtstrom aktiven Sensors 1:

$$I_{Signal,1} = (1+L) * I_{Ref} + (1+H) * I_{Ref} = (2+L+H) * I_{Ref} \quad (9)$$

Auch bei diesem Ausführungsbeispiel lassen sich die logischen "0"- und "1"-Pegel mit Hilfe der Faktoren L, H und $I_{Ref}$ einstellen. Die Umschaltung dieser Pegel geschieht in Abhängigkeit des Messmoduls 2.

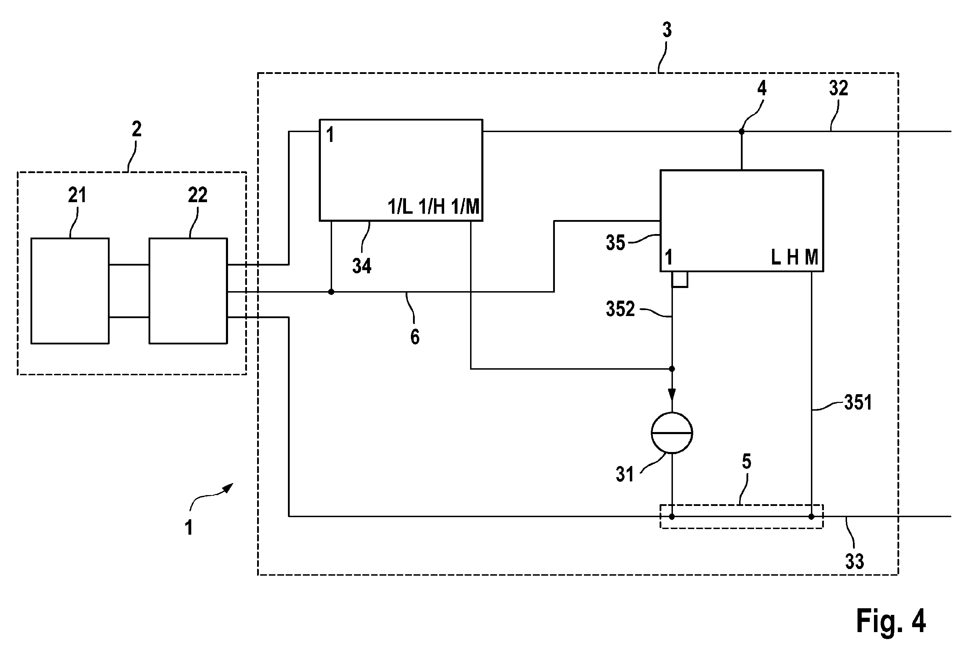

Fig. 4 veranschaulicht einen beispielhaften aktiven Sensor 1 mit einem Messmodul 2, umfassend ein Sensorelement 21 und eine Signalverarbeitungsschaltung 22 und mit Schnittstellenmodul 3. Dieser aktive Sensor 1 wurde gegenüber dem in Fig. 2 gezeigten Ausführungsbeispiel erweitert. Dabei weisen Stromerfassungseinrichtung 34 und Kompensationseinrichtung 35 jeweils einen zusätzlichen Eingang auf, über welchen sie gemeinsam von Signalverarbeitungseinrichtung 22 des Messmoduls 2 mittels einer Steuerleitung 6 angesteuert werden. Über diese Steuerleitung 6 wird beispielgemäß das Umschalten der Skalierfaktoren von Stromerfassungseinrichtung 34 und Kompensationseinrichtung 35 gesteuert. Signalverarbeitungseinrichtung 22 gibt also ständig vor, welcher Skalierfaktor dieser beiden Einrichtungen "aktiv" ist und gibt damit entsprechend die Gesamtamplitude des Ausgangsstromssignals aktiven Sensors 1 vor. Beispielgemäß sind drei unterschiedliche Amplituden des Ausgangsstromsignals $I_{signal}$ einstellbar. Dafür weisen Stromerfassungseinrichtung 34 und Kompensationseinrichtung 35 jeweils drei unterschiedliche Skalierfaktoren L,H,M auf, und rufen entsprechend obig beschriebenen Ausführungsbeispielen, nun mit einem zusätzlichen Skalierfaktor, alternativ die entsprechenden drei Ausgangsströme hervor. Diese drei unterschiedlichen Amplituden werden beispielgemäß für das Datenübertragungsprotokoll des aktiven Sensors 1 als Raddrehzahlsensor verwendet. Dabei werden zwischen den Drehzahlimpulsen, welche durch die größte Amplitude, bzw. den Wechsel zwischen größter und niedrigster Amplitude, codiert sind, Zusatzdaten übertragen, zu deren Codierung die mittlere Amplitude verwendet wird.

In einem nicht dargestellten Ausführungsbeispiel umfasst aktiver Sensor 1 zwei Stromtreiberelemente, wodurch ebenfalls drei unterschiedliche Amplituden des Ausgangsstromsignals definiert eingestellt bzw. hervorgerufen werden können.

**Patentansprüche**

1.  Aktiver Sensor (1) bestehend aus einem Messmodul (2) und einem Schnittstellenmodul (3), welches mindestens eine erste Stromquelle (31), eine Eingangs- (32) und eine Ausgangsleitung (33) umfasst, wobei der aktive Sensor (1) über diese beiden Leitungen (32,33) mit Energie versorgt wird und die erste Stromquelle (31) ausgangsseitig mit der Ausgangsleitung (33) verbunden ist und das Schnittstellenmodul (3) die Ausgangssignale des aktiven Sensors (1) in Form von Stromsignalen erzeugt, **dadurch gekennzeichnet, dass**

    das Schnittstellenmodul (3) eine Stromerfassungseinrichtung (34), welche den Laststrom des Messmoduls (2) erfasst, und mindestens eine Kompensationseinrichtung (35) umfasst, welche an einem mit der Ausgangsleitung verbundenen Ausgangspfad (351) zumindest einen ersten Kompensationsstrom zur Kompensation von Amplitudenschwankungen der Ausgangsstromsignale, zumindest in Abhängigkeit des erfassten Laststroms des Messmoduls (2) hervorrufen kann.

2.  Aktiver Sensor (1) nach Anspruch 1, **dadurch gekennzeichnet, dass** der erste Kompensationsstrom durch die Kompensationseinrichtung (35) in Abhängigkeit des erfassten Laststroms des Messmoduls (2) und des durch die erste Stromquelle (31) erzeugten Stroms hervorgerufen wird.

3.  Aktiver Sensor (1) nach Anspruch 1 oder 2, **dadurch gekennzeichnet, dass** die Kompensationseinrichtung (35) eingangsseitig mit der Eingangsleitung (32) in einem ersten Knotenpunkt (4) verbunden ist, die erste Stromquelle (31) ausgangsseitig mit der Ausgangsleitung (33) in einem zweiten Knotenpunkt (5) verbunden ist und der erste Ausgangspfad (351) der Kompensationseinrichtung (35) mit dem zweiten Knotenpunkt (5) verbunden ist.

4.  Aktiver Sensor (1) nach mindestens einem der Ansprüche 1 bis 3, **dadurch gekennzeichnet, dass** die Stromerfassungseinrichtung (34) ausgangsseitig sowie die Kompensationseinrichtung (35) mittels eines zweiten Ausgangspfades (352) gemeinsam mit dem Eingang der ersten Stromquelle (31) verbunden sind.

5.  Aktiver Sensor (1) nach mindestens einem der Ansprüche 1 bis 4, **dadurch gekennzeichnet, dass** der Eingang der Stromerfassungseinrichtung (34) mit der Eingangs- (32) und/oder Ausgangsleitung (33) zwischen dem Messmodul (2) und dem ersten (4) oder dem zweiten Knotenpunkt (5) verbunden ist.

6.  Aktiver Sensor (1) nach mindestens einem der Ansprüche 1 bis 5, **dadurch gekennzeichnet, dass** die Stromerfassungseinrichtung (34) mindestens einen Strom an ihrem Ausgang bereitstellt, der um einen definierten ersten Skalierfaktor (X1) verschieden, insbesondere geringer ist, als der an ihrem Eingang erfasste Strom.

7.  Aktiver Sensor (1) nach mindestens einem der Ansprüche 4 bis 6, **dadurch gekennzeichnet, dass** der durch die Kompensationseinrichtung (35) hervorgerufene erste Kompensationsstrom um einen definierten zweiten Skalierfaktor (X2) verschieden, insbesondere größer ist, als der am zweiten Ausgangspfad (352) der Kompensationseinrichtung (35) bereitgestellte Strom.

8.  Aktiver Sensor (1) nach Anspruch 6 und 7, **dadurch gekennzeichnet, dass** der erste Skalierfaktor (X1) der Stromerfassungseinrichtung (34) und der zweite Skalierfaktor (X2) der Kompensationseinrichtung (35) im Wesentlichen gleich groß sind.

9. Aktiver Sensor (1) nach mindestens einem der Ansprüche 4 bis 8, **dadurch gekennzeichnet, dass** die Kompensationseinrichtung (35) alternativ zum ersten Kompensationsstrom am ersten Ausgangspfad (351) oder zusätzlich an mindestens einem zusätzlichen mit dem zweiten Knotenpunkt (5) verbundenen Ausgangspfad mindestens einen zweiten, zum ersten Kompensationsstrom unterschiedlichen, Kompensationsstrom hervorrufen kann, wobei diese Kompensationsströme um einen definierten, jeweils zueinander unterschiedlichen Skalierfaktor (L,H,M) größer sind als der am zweiten Ausgangspfad (352) der Kompensationseinrichtung (35) bereitgestellte Strom und wobei zwischen diesen Kompensationsströmen umgeschaltet werden kann.

10. Aktiver Sensor (1) nach mindestens einem der Ansprüche 6 bis 9, **dadurch gekennzeichnet, dass** die Stromerfassungseinrichtung (34) mindestens einen ersten und einen zweiten Strom an ihrem Ausgang bereitstellen kann, welcher um einen definierten, jeweils zueinander unterschiedlichen Skalierfaktor (L,H,M) geringer ist, als der am Eingang erfasste Strom, wobei zwischen diesen ausgangsseitigen Strömen umgeschaltet werden kann.

11. Aktiver Sensor (1) nach mindestens einem der Ansprüche 3 bis 10, **dadurch gekennzeichnet, dass** das Schnittstellenmodul (3) zusätzlich noch mindestens eine zweite, zuschaltbare und/oder regelbare Stromquelle aufweist, welche eingangsseitig mit dem ersten Knotenpunkt (4) und ausgangsseitig mit dem zweiten Knotenpunkt (5) verbunden ist.

12. Aktiver Sensor (1) nach mindestens einem der Ansprüche 6 bis 11, **dadurch gekennzeichnet, dass** das Schnittstellenmodul (3) zusätzlich mindestens ein erstes einschaltbares Stromtreiberelement (36) aufweist, welches eingangsseitig mit dem ersten Knotenpunkt (4) verbunden ist und ausgangsseitig einen ersten Strom am Eingang einer zusätzlichen Stromquelle (361) bereitstellt, deren Ausgang mit dem zweiten Knotenpunkt (5) verbunden ist, und wobei dieses Stromtreiberelement (36) ausgangsseitig zusätzlich einen zweiten Strom, welcher bezüglich des ersten Stroms um einen definierten Skalierfaktor (H) verschieden ist, an mindestens einem mit dem zweiten Knotenpunkt (5) verbundenen Ausgangspfad hervorrufen kann.

13. Aktiver Sensor (1) nach mindestens einem der Ansprüche 1 bis 12, **dadurch gekennzeichnet, dass** das Messmodul (2) und das Schnittstellenmodul (3), oder die Signalverarbeitungschaltung (22) und das Schnittstellenmodul (3) als integrierte Schaltung, insbesondere auf einem Chip, ausgebildet sind.

14. Aktiver Sensor (1) nach mindestens einem der Ansprüche 6 bis 13, **dadurch gekennzeichnet, dass** die Stromerfassungseinrichtung (34) und die Kompensationseinrichtung (35) und insbesondere mindestens ein Stromtreiberelement (36) und/oder mindestens eine zusätzliche, zuschaltbare und/oder regelbare Stromquelle, eingangsseitig mit mindestens einem Signalausgang des Messmoduls (2) verbunden sind und durch das Messmodul (2), insbesondere hinsichtlich einer Umschaltung der Skalierfaktoren (L,H,M), gesteuert werden.

15. Verfahren zur Kompensation von Amplitudenschwankungen der Ausgangsstromsignale eines aktiven Sensor, insbesondere eines aktiven Sensors (1) gemäß mindestens einem der Ansprüche 1 bis 14, welcher aus einem Messmodul (2) und einem Schnittstellenmodul (3), umfassend mindestens eine erste Stromquelle (31), eine Eingangsleitung (32) und eine Ausgangsleitung (33), besteht, wobei der aktive Sensor (1) über diese beiden Leitungen (32,33) mit Energie versorgt wird und das Schnittstellenmodul (3) zumindest mittels der ersten Stromquelle (31) die Ausgangssignale des aktiven Sensors (1) in Form von Stromsignalen erzeugt, **dadurch gekennzeichnet, dass** das Schnittstellenmodul (3) mittels einer Stromerfassungseinrichtung (34) den Laststrom des Messmoduls (2) erfasst und mittels mindestens einer Kompensationseinrichtung (35) wenigstens ein Kompensationsstrom zumindest in Abhängigkeit des erfassten Laststroms des Messmoduls (2) hervorgerufen wird und dieser Kompensationsstrom dem noch unkorrigierten Ausgangsstromsignal des aktiven Sensors (1) überlagert wird.

16. Verfahren nach Anspruch 15, **dadurch gekennzeichnet, dass** die Kompensationseinrichtung (35) mindestens einen zusätzlichen und/oder alternativen Kompensationsstrom hervorrufen kann, wobei zwischen diesen Kompensationsströmen in Abhängigkeit mindestens eines Ausgangssignals des Messmoduls (2) umgeschaltet wird.

17. Verfahren nach Anspruch 15 oder 16, **dadurch gekennzeichnet, dass** das Schnittstellenmodul (3) mindestens eine zusätzliche Stromquelle und/oder mindestens ein Stromtreiberelement (36) aufweist, welches mindestens einen, in Abhängigkeit mindestens eines Ausgangssignals des Messmoduls (2) anschaltbaren oder umschaltbaren, Ausgangsstrom hervorruft, welche/r dem Ausgangsstrom des aktiven Sensors (1) überlagert wird/werden.

**18.** Verwendung mindestens eines aktiven Sensors gemäß mindestens einem der Ansprüche 1 bis 14, insbesondere als Raddrehzahlsensor, in Kraftfahrzeugen.

**Claims**

**1.** Active sensor (1) consisting of a measuring module (2) and an interface module (3), which comprises at least one first current source (31), an input line (32) and an output line (33), wherein the active sensor (1) is supplied with energy via these two lines (32, 33) and the first current source (31) is connected on the output side to the output line (33) and the interface module (3) generates the output signals of the active sensor (1) in the form of current signals, **characterized in that** the interface module (3) comprises a current sensing device (34) which senses the load current of the measuring module (2), and at least one compensating device (35) which can generate, on an output path (351) connected to the output line, at least one first compensating current for compensating for amplitude fluctuations in the output current signals at least in dependence on the sensed load current of the measuring module (2).

**2.** Active sensor (1) according to Claim 1, **characterized in that** the first compensating current is generated by the compensating device (35) in dependence on the sensed load current of the measuring module (2) and the current generated by the first current source (31).

**3.** Active sensor (1) according to Claim 1 or 2, **characterized in that** the compensating device (35) is connected on the input side to the input line (32) in a first node (4), the first current source (31) is connected on the output side to the output line (33) in a second node (5), and the first output path (351) of the compensating device (35) is connected to the second node (5).

**4.** Active sensor (1) according to at least one of Claims 1 to 3, **characterized in that** the current sensing device (34), on the output side, and the compensating device (35), are jointly connected to the input of the first current source (31) by means of a second output path (352).

**5.** Active sensor (1) according to at least one of Claims 1 to 4, **characterized in that** the input of the current sensing device (34) is connected to the input line (32) and/or output line (33) between the measuring module (2) and the first (4) or the second node (5).

**6.** Active sensor (1) according to at least one of Claims 1 to 5, **characterized in that** the current sensing device (34) provides at its output at least one current which is different, particularly less, by a defined first scaling factor (X1) than the current sensed at its input.

**7.** Active sensor (1) according to at least one of Claims 4 to 6, **characterized in that** the first compensating current generated by the compensating device (35) is different, particularly greater, by a defined second scaling factor (X2) than the current provided at the second output path (352) of the compensating device (35).

**8.** Active sensor (1) according to Claim 6 and 7, **characterized in that** the first scaling factor (X1) of the current sensing device (34) and the second scaling factor (X2) of the compensating device (35) are essentially equally large.

**9.** Active sensor (1) according to at least one of Claims 4 to 8, **characterized in that** the compensating device (35) can generate, as an alternative to the first compensating current at the first output path (351) or additionally at at least one additional output path connected to the second node (5), at least one second compensating current which differs from the first compensating current, wherein these compensating currents are greater by a defined, in each case mutually different scaling factor (L, H, M), than the current provided at the second output path (352) of the compensating device (35), and wherein it is possible to switch between these compensating currents.

**10.** Active sensor (1) according to at least one Claims 6 to 9, **characterized in that** the current sensing device (34) can provide at its output at least one first and one second current which is less by a defined in each case mutually different scaling factor (L, H, M) than the current sensed at the input, wherein it is possible to switch between these currents on the output side.

**11.** Active sensor (1) according to at least one of Claims 3 to 10, **characterized in that** the interface module (3) additionally also has at least one second connectable and/or controllable current source which is connected to the first node (4) on the input side and to the second node (5) on the output side.

12. Active sensor (1) according to at least one of Claims 6 to 11, **characterized in that** the interface module (3) additionally has at least one first current driver element (36) capable of being switched on, which is connected to the first node (4) on the input side and provides on the output side a first current at the input of an additional current source (361), the output of which is connected to the second node (5), and wherein this current driver element (36) can additionally generate on the output side a second current which is different by a defined scaling factor (H) with respect to the first current, at at least one output path connected to the second node (5).

13. Active sensor (1) according to at least one of Claims 1 to 12, **characterized in that** the measuring module (2) and the interface module (3), or the signal processing circuit (22) and the interface module (3) are constructed as an integrated circuit, especially on a chip.

14. Active sensor (1) according to at least one of Claims 6 to 13, **characterized in that** the current sensing device (34) and the compensating device (35) and especially at least one current driver element (36) and/or at least one additional connectable and/or controllable current source are connected to at least one signal output of the measuring module (2) on the input side and are controlled by the measuring module (2), especially with regard to a switching-over of the scaling factors (L, H, M).

15. Method for compensating for amplitude fluctuations in the output current signals of an active sensor, especially of an active sensor (1) according to at least one of Claims 1 to 14, which consists of a measuring module (2) and an interface module (3) comprising at least one first current source (31), an input line (32) and an output line (33), wherein the active sensor (1) is supplied with energy by these two lines (32, 33) and the interface module (3) generates the output signals of the active sensor (1) in the form of current signals at least by means of the first current source (31), **characterized in that** the interface module (3) senses the load current of the measuring module (2) by means of a current sensing device (34) and, by means of at least one compensating device (35), at least one compensating current is generated at least in dependence on the sensed load current of the measuring module (2) and this compensating current is superimposed on the as yet uncorrected output current signal of the active sensor (1).

16. Method according to Claim 15, **characterized in that** the compensating device (35) can generate at least one additional and/or alternative compensating current, wherein switching is effected between these compensating currents in dependence on at least one output signal of the measuring module (2).

17. Method according to Claim 15 or 16, **characterized in that** the interface module (3) has at least one additional current source and/or at least one current driver element (36) which generates at least one output current which can be connected or switched in dependence on at least one output signal of the measuring module (2) and which is/are superimposed on the output current of the active sensor (1).

18. Use of at least one active sensor according to at least one of Claims 1 to 14, especially as wheel speed sensor, in motor vehicles.


**Revendications**

1. Capteur actif (1) constitué d'un module de mesure (2) et d'un module d'interface (3) qui présente au moins une première source de courant (31), un conducteur d'entrée (32) et un conducteur de sortie (33),
le capteur actif (1) étant alimenté en énergie par ces deux conducteurs (32, 33) et la sortie de la première source de courant (31) étant raccordée au conducteur de sortie (33),
le module d'interface (3) formant les signaux de sortie du capteur actif (1) sous la forme de signaux de courant,
**caractérisé en ce que**
le module d'interface (3) comporte un dispositif (34) de saisie du courant qui saisit le courant de charge du module de mesure (2) et au moins un dispositif de compensation (35) qui peut provoquer sur un parcours de sortie (351) raccordé au conducteur de sortie au moins un premier courant de compensation qui compense des variations d'amplitude des signaux de courant de sortie au moins en fonction du courant de charge du module de mesure (2) qui a été saisi.

2. Capteur actif (1) selon la revendication 1, **caractérisé en ce que** le premier courant de compensation est provoqué par le dispositif de compensation (35) en fonction du courant de charge du module de mesure (2) qui a été saisi et du courant qui a été formé par la première source de courant (31).

3. Capteur actif (1) selon les revendications 1 ou 2, **caractérisé en ce que** l'entrée du dispositif de compensation (35) est raccordée au conducteur d'entrée (32) en un premier point de noeud (4), **en ce que** la sortie de la première source de courant (31) est raccordée au conducteur de sortie (33) en un deuxième point de noeud (5) et **en ce que** le premier parcours de sortie (351) du dispositif de compensation (35) est raccordé au deuxième point de noeud (5).

4. Capteur actif (1) selon au moins l'une des revendications 1 à 3, **caractérisé en ce que** la sortie du dispositif (34) de saisie de courant ainsi que le dispositif de compensation (35) sont raccordés conjointement à l'entrée de la première source de courant (31) au moyen d'un deuxième parcours de sortie (352).

5. Capteur actif (1) selon au moins l'une des revendications 1 à 4, **caractérisé en ce que** l'entrée du dispositif (34) de saisie de courant est raccordée au conducteur d'entrée (32) et/ou au conducteur de sortie (33) entre le module de mesure (2) et le premier point de noeud (4) ou le deuxième point de noeud (5).

6. Capteur actif (1) selon au moins l'une des revendications 1 à 5, **caractérisé en ce que** le dispositif (34) de saisie de courant délivre à sa sortie au moins un courant qui est différent et en particulier plus petit d'un premier facteur d'échelle défini (X1) que le courant saisi à son entrée.

7. Capteur actif (1) selon au moins l'une des revendications 4 à 6, **caractérisé en ce que** le premier courant de compensation formé par le dispositif de compensation (35) diffère et en particulier est plus grand d'un deuxième facteur d'échelle défini (X2) que le courant délivré sur le deuxième parcours de sortie (352) du dispositif de compensation (35).

8. Capteur actif (1) selon les revendications 6 et 7, **caractérisé en ce que** le premier facteur d'échelle (X1) du dispositif (34) de saisie de courant et le deuxième facteur d'échelle (X2) du dispositif de compensation (35) sont essentiellement identiques.

9. Capteur actif (1) selon au moins l'une des revendications 4 à 8, **caractérisé en ce qu'**en variante ou en supplément au premier courant de compensation sur le premier parcours de sortie (351), le dispositif de compensation (35) peut provoquer sur au moins un parcours supplémentaire de sortie raccordé au deuxième point de noeud (5) au moins un deuxième courant de compensation différent du premier courant de compensation, ces courants de compensation étant supérieurs de facteurs d'échelle (L, H, M) définis, différents les uns des autres, au courant délivré sur le deuxième parcours de sortie (352) du dispositif de compensation (35), avec une possibilité de commutation entre ces courants de compensation.

10. Capteur actif (1) selon au moins l'une des revendications 6 à 9, **caractérisé en ce que** le dispositif (34) de saisie de courant peut délivrer au moins un premier et un deuxième courant sur sa sortie, ces courants étant inférieurs de facteurs d'échelle (L, H, M) définis, différents les uns des autres, au courant saisi sur l'entrée, avec possibilité de commutation entre ces courants de sortie.

11. Capteur actif (1) selon au moins l'une des revendications 3 à 10, **caractérisé en ce que** le module d'interface (3) présente de plus encore au moins une deuxième source de courant raccordable et/ou régulable dont l'entrée est raccordée au premier point de noeud (4) et la sortie au deuxième point de noeud (5).

12. Capteur actif (1) selon au moins l'une des revendications 6 à 11, **caractérisé en ce que** le module d'interface (3) présente de plus au moins un élément raccordable (36) de pilote de courant dont l'entrée est raccordée au premier point de noeud (4) et la sortie délivre un premier courant à l'entrée d'une source supplémentaire de courant (361) dont la sortie est raccordée au deuxième point de noeud (5), la sortie de cet élément (36) de pilote de courant pouvant provoquer de plus un deuxième courant qui diffère du premier courant d'un facteur d'échelle (H) défini sur au moins un parcours de sortie raccordé au deuxième point de noeud (5).

13. Capteur actif (1) selon au moins l'une des revendications 1 à 12, **caractérisé en ce que** le module de mesure (2) et le module d'interface (3) ou le circuit (22) de traitement de signaux et le module d'interface (3) sont configurés sous la forme d'un circuit intégré, en particulier sur une puce.

14. Capteur actif (1) selon au moins l'une des revendications 6 à 13, **caractérisé en ce que** le dispositif (34) de saisie de courant et le dispositif de compensation (35) et en particulier au moins un élément (36) de pilote de courant et/ou au moins une source de courant supplémentaire, raccordable et/ou régulable, sont raccordés par leur entrée à au moins une sortie de signaux du module de mesure (2) et sont commandés par le module de mesure (2), en particulier en termes de commutation des facteurs d'échelle (L, H, M).

15. Procédé de compensation de variations d'amplitude des signaux de courant de sortie d'un capteur actif, en particulier d'un capteur actif (1) selon au moins l'une des revendications 1 à 14, constitué d'un module de mesure (2) et d'un module d'interface (3) qui comporte au moins une première source de courant (31), un conducteur d'entrée (32) et un conducteur de sortie (33), le capteur actif (1) étant alimenté en énergie par ces deux conducteurs (32, 33) et le module d'interface (3) formant au moins au moyen de la première source de courant (31) les signaux de sortie du capteur actif (1) sous la forme de signaux de courant,
   **caractérisé en ce que**
   le module d'interface (3) saisit au moyen d'un dispositif (34) de saisie de courant le courant de charge du module de mesure (2) et au moins un courant de compensation est provoqué au moyen d'un dispositif de compensation (35) au moins en fonction du courant de charge du module de mesure (2) qui a été saisi, ce courant de compensation étant superposé au signal de courant de sortie encore non corrigé du capteur actif (1).

16. Procédé selon la revendication 15, **caractérisé en ce que** le dispositif de compensation (35) peut provoquer au moins un courant de compensation supplémentaire et/ou alternatif, avec commutation entre ces courants de compensation en fonction d'au moins un signal de sortie du module de mesure (2).

17. Procédé selon les revendications 15 ou 16, **caractérisé en ce que** le module d'interface (3) présente au moins une source supplémentaire de courant et/ou au moins un élément (36) de pilote de courant qui provoque au moins un courant de sortie commutable en fonction d'au moins un signal de sortie du module de mesure (2) et/ou commutable et qui est superposé au courant de sortie du capteur actif (1).

18. Utilisation d'au moins un capteur actif selon au moins l'une des revendications 1 à 14 en particulier comme capteur de vitesse de rotation de roue dans des véhicules automobiles.

Fig. 1

Fig. 2

EP 2 097 301 B1

Fig. 3

EP 2 097 301 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9808711 A
- DE 19906981 A1